(19) Europäisches Patentamt / European Patent Office / Office européen des brevets

(11) **EP 3 857 182 B1**

(12) **EUROPÄISCHE PATENTSCHRIFT**

(45) Veröffentlichungstag und Bekanntmachung des Hinweises auf die Patenterteilung:
**18.01.2023   Patentblatt 2023/03**

(21) Anmeldenummer: **19755905.7**

(22) Anmeldetag: **19.08.2019**

(51) Internationale Patentklassifikation (IPC):
**G01F 23/284** *(2006.01)*       **G01F 23/80** *(2022.01)*
**G01S 7/292** *(2006.01)*       **G01S 13/10** *(2006.01)*
**G01S 13/88** *(2006.01)*

(52) Gemeinsame Patentklassifikation (CPC):
**G01F 23/284; G01F 23/804; G01F 23/806;
G01S 7/2923; G01S 13/103; G01S 13/88**

(86) Internationale Anmeldenummer:
**PCT/EP2019/072118**

(87) Internationale Veröffentlichungsnummer:
**WO 2020/064218 (02.04.2020 Gazette 2020/14)**

(54) **FÜLLSTANDSMESSGERÄT**

LEVEL GAUGE

JAUGE DE NIVEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2018   DE 102018123429**

(43) Veröffentlichungstag der Anmeldung:
**04.08.2021   Patentblatt 2021/31**

(73) Patentinhaber: **Endress+Hauser SE+Co. KG
79689 Maulburg (DE)**

(72) Erfinder:
• **DAUFELD, Ghislain
68128 Village Neuf (FR)**
• **GORENFLO, Stefan
79688 Hausen (DE)**
• **MALINOVSKIY, Alexey
79689 Maulburg (DE)**
• **MERLE, Jens
79650 Schopfheim (DE)**
• **VOGEL, Markus
79650 Schopfheim (DE)**

(74) Vertreter: **Koslowski, Christine Adelheid
Endress+Hauser Group Services
(Deutschland) AG+Co. KG
Colmarer Straße 6
79576 Weil am Rhein (DE)**

(56) Entgegenhaltungen:
EP-A2- 1 072 871          WO-A1-01/02819
WO-A1-2016/202533    DE-A1-102015 115 462
DE-A1-102018 127 012    DE-B3-102017 207 783
US-A1- 2002 075 976    US-A1- 2002 133 303
US-A1- 2002 133 303    US-A1- 2011 279 306
US-A1- 2012 056 628    US-A1- 2017 370 762
US-A1- 2019 195 674

**Beschreibung**

Die Erfindung betrifft ein Verfahren zur Füllstandsmessung eines in einem Behälter befindlichen Füllgutes sowie ein Füllstandsmessgerät zur Ausführung dieses Verfahrens.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können (im Kontext dieser Patentanmeldung bezieht sich der Begriff *"Radar"* auf Signale bzw. elektromagnetische Wellen mit Frequenzen zwischen 0.03 GHz und 300 GHz).

Im Fall von Radar-basierter Füllstandsmessung bildet das Pulslaufzeit-Verfahren ein etabliertes Messprinzip. Hierbei werden Mikrowellenpulse zyklisch mit einer definierten Taktrate in Richtung des Füllguts ausgesandt und die Laufzeit bis zum Empfang des entsprechend reflektierten Mikrowellenpulses gemessen.

Zur Ermittlung der Laufzeit bzw. des Füllstandes wird anhand der empfangenen, reflektierten Mikrowellenpulse ein entsprechendes Auswertungssignal aufgezeichnet. Dabei wird das Auswertungssignal aufgrund der hohen Pulsfrequenz durch Unterabtastung der reflektierten Mikrowellenpulse erstellt. Die Unterabtastung erfolgt durch Mischen der reflektierten Mikrowellenpulse mit entsprechenden erzeugten Abtastpulsen, wobei deren Abtastrate um eine definierte Relation von der Taktrate der ausgesendeten Mikrowellenpulse abweicht. Damit diese definierte Soll-Phasenänderung zwischen der Abtastrate und der Taktrate eingehalten wird, wird die Abtastrate durch einen Regelkreis in Abhängigkeit der gemessenen Relation nachgeregelt.

Insgesamt bildet das Auswertungssignal somit die Signalamplitude der reflektierten Mikrowellenpulse zeitgedehnt ab. Hierbei spiegelt das Auswertungssignal die Signalamplitude der reflektierten Mikrowellenpulse in Abhängigkeit der Messdistanz wieder.

Auf Basis des Pulslaufzeit-Verfahrens können Füllstandsmessgeräte mit vergleichsweise geringem schaltungstechnischem Aufwand und einer hohen Füllstands-Auflösung im Sub-Millimeterbereich realisiert werden. Ein Radar-basiertes Füllstandsmessgerät, welches nach dem Pulslaufzeit-Verfahren arbeitet, ist beispielsweise in der Offenlegungsschrift DE 10 2012 104 858 A1 beschrieben.

Neben frei abstrahlender Radar-Messung, bei der die Mikrowellenpulse über eine Antenne ausgesendet bzw. empfangen werden, existiert zudem die Variante des geführten Radars. Hierbei werden die Mikrowellenpulse über eine elektrisch leitfähige Sonde (bspw. ein Koaxial-Kabel oder einen Metallstab), die in den Behälter hinuntergelassen ist, geführt. Am Ort der Füllgutoberfläche werden in der Sonde die Mikrowellenpulse reflektiert und entlang der Sonde gen Füllstandsmessgerät zurückgeleitet. Bekannt ist diese Variante der Radar-basierten Füllstandsmessung auch unter dem Begriff *"TDR"* (*"Time Domain Reflectometry"*). Vorteilhaft an dieser Variante ist, dass aufgrund der geführten Signalabstrahlung weniger Leistung zum Betrieb des Füllstandsmessgerätes erforderlich ist. Analog zu frei abstrahlenden Radargeräten nach dem Pulslaufzeit-Verfahren wird auch bei Implementierung des TDR-Prinzips ein Auswertungssignal zur Ermittlung des Füllstandes erstellt.

Der Füllstand wird aus dem Auswertungssignal durch Detektion und örtlicher Zuweisung des entsprechenden lokalen Signal-Maximums bestimmt. In den Fällen, in denen die Abtastrate zur Abtastung der empfangenen Mikrowellenpulse jedoch nicht der Soll-Abtastrate entspricht, wird die zum Signal-Maximum korrespondierende Messdistanz und somit die Füllstandsmessung verfälscht, da das Auswertungssignal je nach Abweichung zeitlich gedehnt oder gestaucht wird. Ein Grund für eine Abweichung von der Soll-Abtastrate kann in einer ungenauen bzw. langsamen Regelung der Abtastrate liegen. Infolge dessen reduziert sich die potentiell erzielbare Genauigkeit des Füllstandsmessgerätes. Die Dokumente US 2017/370762 A1, US 2002/133303 A1 und US2012/056628 A1 beschreiben ein zeitgedehntes Auswertungssignal durch Unterabtastung bei Pulslaufzeitbasierter Radar-Füllstandsmessung.

Der Erfindung liegt daher die Aufgabe zugrunde, ein genaueres Füllstandsmessgerät bereitzustellen.

Die Erfindung löst diese Aufgabe durch ein Verfahren zur Radar-basierten Messung des Füllstandes eines in einem Behälter befindlichen Füllgutes, das folgende Verfahrensschritte umfasst:

- Getaktetes Aussenden von Mikrowellenpulsen in Richtung des Füllgutes mit einer definierten Taktrate,
- Empfang reflektierter Mikrowellenpulse nach Reflektion an der Oberfläche des Füllgutes,
- Erstellung eines Auswertungssignals durch Abtastung der empfangenen Mikrowellenpulse mit einer definierten Abtastrate,
- Messung einer Relation zwischen der Taktrate und der Abtastrate,
- Erstellung einer Auswertungskurve (ZF'), indem das Auswertungssignal (ZF) zeitlich gedehnt bzw. gestaucht wird, wobei die Stauchung ($\Delta t$) bzw. die Deh-

nung (Δt) proportional in Abhängigkeit eines Verhältnisses (Φ/Φref) zwischen der gemessenen Relation (Φ) und der Soll-Relation (Φref) durchgeführt wird.

Vorteilhaft an dem erfindungsgemäßen Verfahren ist, dass eine etwaige ungenaue Regelung der Abtastrate kompensiert wird, so dass die erzielbare Genauigkeit der Füllstandsmessung potentiell erhöht wird. Gleichzeitig sinken hierdurch die technischen Anforderungen an die Regelung der Abtastrate.

Es versteht sich von selbst, dass das erfindungsgemäße Verfahren nicht nur zur Messung eines Abstandes zur Füllgut-Oberfläche eingesetzt werden kann, sondern zudem zur Radar-basierten Abstandsmessung allgemein.

Um eine ungenaue Regelung zu kompensieren, ist es vorteilhaft, die Dehnung bzw. die Stauchung des Auswertungssignals hin zur Auswertungskurve proportional in Abhängigkeit des Verhältnisses zwischen der gemessenen Relation und der Soll-Relation durchzuführen. Das heißt, je größer das Verhältnis von gemessener Relation zu Soll-Relation ist, umso mehr ist zu dehnen. Falls das Verhältnis größer als 1 ist, muss das Auswertungssignal gedehnt werden, bei kleinerem Verhältnis als 1 ist zu stauchen.

Anhand des Auswertungssignals, der gemessenen Relation und der Soll-Relation kann die Auswertungskurve beispielsweise erstellt werden, mittels:

- Gleichrichten des Auswertungssignals, sofern es sich um frei abstrahlendes Radar handelt,
- Digitalisierung des (ggf. gleichgerichteten) Auswertungssignals,
- Bestimmung einer mathematischen Funktion mittels zumindest bereichsweiser Approximation des digitalisierten Auswertungssignals, und
- Erstellung der Auswertungskurve mittels zeitlicher Dehnung bzw. zeitlicher Stauchung der approximierten, mathematischen Funktion, wobei die Stauchung bzw. die Dehnung in Abhängigkeit des Verhältnisses zwischen der gemessenen Relation und der Soll-Relation durchgeführt wird.

Die Art der Approximation ist im Rahmen der Erfindung nicht fest vorgeschrieben. Die Approximation kann beispielsweise als ggf. teilweise polynomielle Approximation wie einem Spline implementiert sein. Dabei ist bevorzugt eine polynomielle Approximation 3.

Grades oder höher zu implementieren. Bei begrenzter Rechenleistung kann jedoch beispielsweise auch eine stückweise, lineare Approximation des Auswertungssignals angewendet werden.

Anhand der Auswertungskurve kann der Füllstand bestimmt werden, indem dasjenige Maximum der Auswertungskurve ermittelt wird, das durch die Füllgut-Oberfläche hervorgerufen ist. Diesem Maximum wird dann die entsprechende Signallaufzeit zugeordnet, wobei der Füllstand anhand derjenigen Messdistanz, die zur Signallaufzeit korrespondiert, bestimmt wird.

Analog zu dem erfindungsgemäßen Verfahren wird die Aufgabe, die der Erfindung zugrunde liegt, durch ein Radar-basiertes Füllstandsmessgerät gelöst, das zur Durchführung des Verfahrens nach zumindest einer der vorhergehenden Ausführungsformen ausgelegt ist. Dementsprechend umfasst das erfindungsgemäße Füllstandsmessgerät folgende Komponenten:

- Eine Puls-Erzeugungseinheit, die ausgelegt ist, elektrische Hochfrequenz-Pulse mit einer definierten Taktrate zu erzeugen,
- eine Sende-/Empfangseinheit, die konzipiert ist,

    ◦ um die Hochfrequenz-Pulse als Mikrowellenpulse in Richtung des Füllgutes auszusenden, und
    ◦ um die reflektierten Mikrowellenpulse nach Reflektion an der Oberfläche des Füllgutes zu empfangen,

- eine Abtast-Einheit, die ausgelegt ist, elektrische Abtast-Pulse mit einer definierten Abtastrate zu erzeugen,
- einen Mischer, der ausgestaltet ist, um die empfangenen Mikrowellenpulse derart mit den Abtastpulsen zu mischen, dass ein zeitgedehntes Auswertungssignal erzeugt wird,
- einen Detektor, der ausgelegt ist, eine Relation zwischen der Abtastrate der Abtast-Pulse und der Taktrate der Hochfrequenzpulse zu messen, und
- eine Auswertungseinheit, die ausgelegt ist, um eine Auswertungskurve (ZF') zu erstellen, indem das Auswertungssignal (ZF) zeitlich gedehnt bzw. gestaucht wird, wobei die Stauchung (Δt) bzw. die Dehnung (Δt) proportional in Abhängigkeit eines Verhältnisses (Φ/Φref) zwischen der gemessenen Relation (Φ) und der Soll-Relation (Φref) durchgeführt wird,

    ◦ um anhand der Auswertungskurve den Füllstand zu bestimmen.

Die Erfindung schließt dabei nicht aus, dass das Füllstandsmessgerät zudem die Abtastrate so in Abhängigkeit der gemessenen Relation regelt, dass die Relation der Soll-Relation entspricht. Dies kompensiert etwaige Temperaturabhängigkeiten oder Alterungseffekte der Abtast-Einheit und vermindert somit ebenfalls die Genauigkeits-Verluste der Füllstandsmessung.

Unter dem Begriff *"Einheit"* wird im Rahmen der Erfindung prinzipiell eine elektronische Schaltung verstanden, die für ihren Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine (halbleiterbasierte) Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:

Fig. 1: Eine Anordnung eines Radar-Füllstandsmessgerätes,

Fig. 2: einen schaltungstechnischen Aufbau des Füllstandsmessgerätes, und

Fig. 3: eine erfindungsgemäße Auswertungskurve.

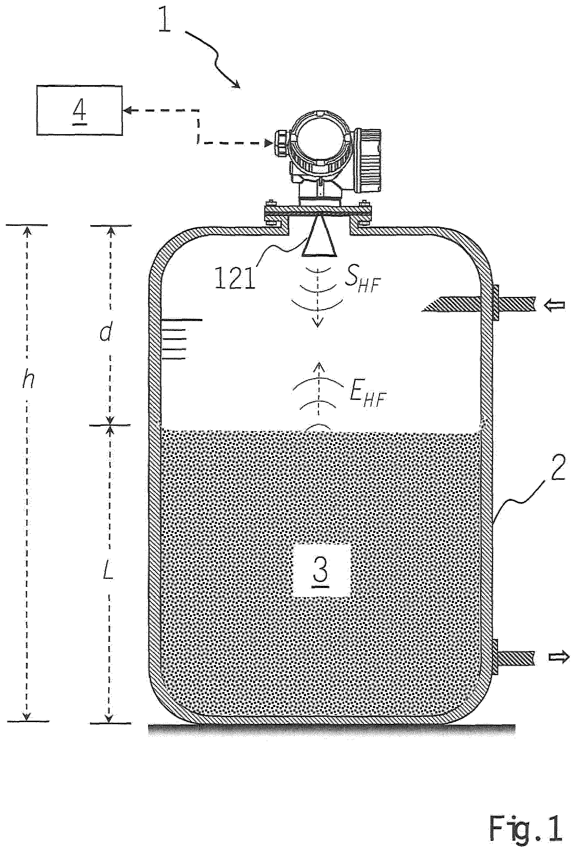

Zum grundsätzlichen Verständnis der Erfindung ist in Fig. 1 eine typische Anordnung eines frei abstrahlenden, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Höhe h des Behälters 2 bis zu 75 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 2 vorhandene Zu- oder Abflüsse zu steuern.

Da das in Fig. 1 dargestellte Füllstandsmessgerät 1 als frei abstrahlendes Radar ausgelegt ist, umfasst es eine entsprechende Antenne 121. Dabei kann die Antenne 121, wie angedeutet, beispielswiese als Hornantenne ausgelegt sein. Insbesondere bei Radar-Frequenzen oberhalb von 100 GHz kann die Antenne 121 auch als Planar-Antenne realisiert sein. Unabhängig von der Bauform ist die Antenne 121 so ausgerichtet, dass gemäß dem Pulslaufzeit-Verfahren entsprechende Mikrowellenpulse $S_{HF}$ in Richtung des Füllgutes 3 ausgesendet werden.

An der Oberfläche des Füllgutes 3 werden die Mikrowellenpulse $E_{HF}$ reflektiert und nach einer korrespondierenden Signallaufzeit an der Antenne 121 als entsprechende elektrische Empfangssignale $e_{HF}$ empfangen. Hierbei hängt die Signallaufzeit der Mikrowellenpulse $S_{HF}$, $E_{HF}$ von der Entfernung d = h - L des Füllstandsmessgerätes 1 zur Füllgut-Oberfläche ab.

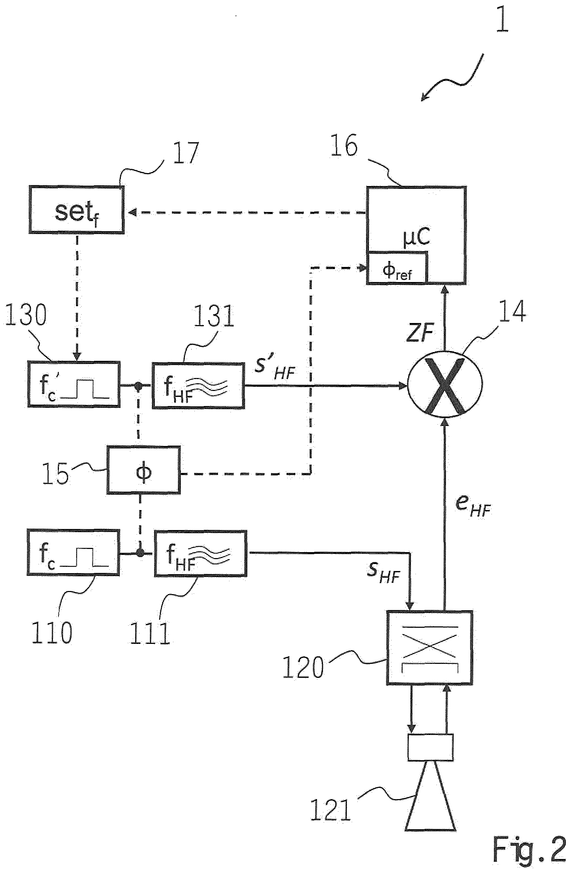

Ein schaltungstechnischer Aufbau des Füllstandsmessgerätes 1, mit dem die Mikrowellenpulse $S_{HF}$ erzeugt werden können, und mit dem auf Basis der elektrischen Empfangssignale $e_{HF}$ der Füllstand L bestimmt werden kann, ist in Fig. 2 gezeigt:

Zur Erzeugung der Mikrowellenpulse $S_{HF}$ umfasst die in Fig. 2 gezeigte Schaltung des Füllstandsmessgerätes 1 eine Puls-Erzeugungseinheit. Die Puls-Erzeugungseinheit ist so konzipiert, dass sie elektrische Hochfrequenz-Pulse $S_{HF}$ mit einer definierten Taktrate $f_c$ erzeugt. Hierzu besteht die Puls-Erzeugungseinheit im gezeigten Ausführungsbeispiel aus einem ersten Pulsgenerator 110, der einen ersten Hochfrequenz-Oszillator 111 ansteuert. Durch die Schwingfrequenz des Hochfrequenz-Oszillators 111 wird die Frequenz der Mikrowellenpulse $S_{HF}$, $E_{HF}$ festgelegt. Dabei kann der Hochfrequenz-Oszillator 111 im einfachsten Fall als Schwingquarz ausgelegt sein. Es kann auch ein VCO ("*Voltage Controlled Oscillator*") eingesetzt werden. In diesem Fall wird der Hochfrequenz-Oszillator 111 durch den Pulsgenerator 110 mittels eines Gleichspannungssignals angesteuert. Hierdurch definiert der Pulsgenerator 110 die Pulsdauer der einzelnen Mikrowellenpulse $S_{HF}$ sowie die Taktrate $f_c$, mit der die Mikrowellenpulse $S_{HF}$ ausgesendet werden. Standardmäßig wird als Hochfrequenz-Oszillator 111 ein Halbleiterbasierter Digital-Schwingkreis verwendet. Die Taktrate beträgt in der Praxis zwischen 100 KHz und 1 MHz.

Die hierdurch vom Hochfrequenz-Oszillator 111 erzeugten Hochfrequenz-Pulse $S_{HF}$ werden über eine Sende-/Empfangsweiche 120 der Antenne 121 zugeführt, so dass sie entsprechend als Mikrowellenpulse $S_{HF}$ ausgesendet werden. Da über die Antenne 121 außerdem die reflektierten Mikrowellenpulse $E_{HF}$ empfangen werden, führt die Sende-/Empfangsweiche 120 das entsprechende elektrische Empfangssignal $e_{HF}$ einem Mischer 14 zu.

Im Gegensatz zu der gezeigten Ausführungsvariante kann anstelle der Antenne 121 auch eine elektrisch leitfähige Sonde wie ein Hohlleiter oder ein Koaxialkabel eingesetzt werden, die sich gen Behälterboden erstreckt. Bei Implementierung dieser unter dem Begriff TDR ("*Time Domain Reflectometry")* bekannten Ausführungsvariante sind im Gegensatz zu der in Fig. 2 gezeigten Schaltung die Hochfrequenz-Oszillatoren 111, 131 nicht erforderlich.

Mittels des Mischers 14 erfolgt die beim Pulslaufzeit-Verfahren charakteristische Unterabtastung des Empfangssignals $e_{HF}$. Hierzu wird das Empfangssignal $e_{HF}$ durch den Mischer 14 mit elektrischen Abtast-Pulsen $s'_{HF}$ gemischt. Dabei weicht die Abtastrate $f'_c$, mit der die Abtast-Pulse $s'_{HF}$ erzeugt werden, um eine definierte, geringe Relation $\phi$ von weit weniger als 0.1 Promille von der Taktrate $f_c$ der erzeugten Hochfrequenz-Pulse $S_{HF}$ ab.

Erzeugt werden die Abtast-Pulse $s'_{HF}$ durch eine Abtast-Einheit, die analog zu der Puls-Erzeugungseinheit einen zweiten Pulsgenerator 130 und einen zweiten Hochfrequenz-Oszillator 131 umfasst. Somit wird korrespondierend zu den Hochfrequenz-Pulsen $S_{HF}$ die Frequenz $f_{HF}$ der Abtastpulse $s'_{HF}$ durch den zweiten Hochfrequenz-Oszillator 131 definiert. Der zweite Pulsgenerator 130 steuert die Abtast-Rate $f'_c$, mit der die Abtast-Pulse $s'_{HF}$ erzeugt werden.

Durch das Mischen des Empfangssignals $e_{HF}$ mit den elektrischen Abtast-Pulse $s'_{HF}$ durch den Mischer 14 wird ein Auswertungssignal ZF erzeugt, welches das Empfangssignal $e_{HF}$ zeitgedehnt abbildet. Dabei ist der Zeitdehnungsfaktor proportional zur Relation $\phi$ zwischen der Taktrate $f_c$ und der Abtastrate $f'_c$.

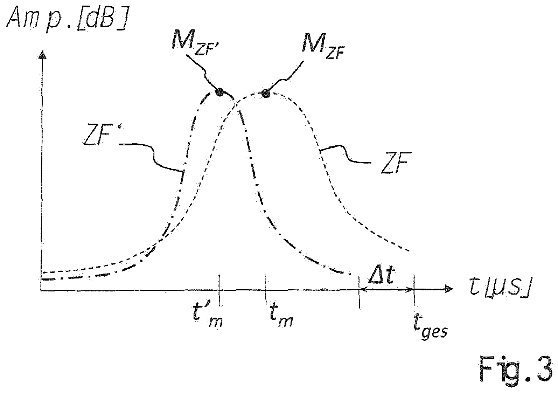

Vorteilhaft an der Zeitdehnung ist, dass das Auswertungssignal ZF aufgrund der Zeitdehnung im Vergleich zu dem reinen Empfangssignal $e_{HF}$ technisch deutlich einfacher auswertbar ist: Der Grund hierfür ist, dass das Empfangssignal $e_{HF}$ aufgrund der hohen Ausbreitungsgeschwindigkeit der Mikrowellenpulse $S_{HF}$, $E_{HF}$ mit Lichtgeschwindigkeit eine entsprechend kurze Zeitskala t im Nanosekundenbereich aufweist. Durch die Zeitdehnung erhält das Auswertungssignal ZF eine Zeitskala im Millisekunden-Bereich. Eine Auswertungskurve ZF ist schematisch in Fig. 3 dargestellt: Nach dem Stand der Technik wird auf Basis des Auswertungssignals ZF der Füllstand L bestimmt, indem ein Ampliduten-Maximum $M_{ZF}$ des Auswertungssignals ZF identifiziert wird, das dem von der Füllgut-Oberfläche reflektierten Mikrowellenpuls $E_{HF}$ entspricht. Anhand der Signallaufzeit $t_m$, die dem Maximum $M_{ZF}$ zugeordnet ist, kann eine Auswertungseinheit 16 des Füllstandsmessgerätes 1 die Entfernung d zur Oberfläche des Füllgutes 3 bestimmen, um daraus den Füllstand L herzuleiten.

Zur korrekten Bestimmung des Füllstandes L auf Basis des Auswertungssignals ZF ist es essentiell, dass die Abtast-Rate $f'_c$ der Abtast-Einheit exakt ihrer Soll-Abtast-Rate entspricht: Dies bedeutet, dass die Relation $\phi$ zur Taktrate $f_c$ der Pulserzeugungs-Einheit einer geforderten Soll-Relation $\phi_{ref}$ entspricht. Damit die Abtast-Rate $f'_c$ hiervon nicht wegdriftet, wird sie entsprechend geregelt. Die Regelung erfolgt bei dem in Fig. 2 gezeigten Ausführungsbeispiel durch einen Detektor 15, der die Relation $\phi$ zwischen der Taktrate $f_c$ und der Abtast-Rate $f'_c$ hinter dem ersten Pulsgenerator 110 bzw. dem zweiten Pulsgenerator 130 misst. Technisch umsetzbar ist dies beispielsweise, indem der Detektor 15 über mehrere Phasen eine Änderung der Zeitverschiebung zwischen der positiven Flanke am ersten Pulsgenerator 110 und der positiven Flanke am zweiten Pulsgenerator 130 misst.

Aus der Änderung der Zeitverschiebung berechnet die Auswertungseinheit 16 die Relation $\phi$, zwischen der Taktrate $f_c$ und der Abtast-Rate $f'_c$. Außerdem gleicht die Auswertungseinheit 16 die ermittelte Relation $\phi$ zwischen der Taktrate $f_c$ und der Abtast-Rate $f'_c$ mit einer hinterlegten Soll-Relation $\phi_{ref}$ ab. Hierdurch kann die Auswertungseinheit 16 die Abtastrate $f'_c$ am zweiten Pulsgenerator 130 so in Abhängigkeit der gemessenen Relation $\phi$ regeln, dass die Relation $\phi$ mit der Soll-Relation $\phi_{ref}$ übereinstimmt. Bei der in Fig. 2 gezeigten Ausführungsvariante ist der Auswertungseinheit 16 und dem zweiten Pulsgenerator 130 ein Signalwandler 17 zwischengeschaltet, um dem Pulsgenerator 130 ein analoges Steuersignal bereitzustellen. Hierzu kann der Signalwandler 17 beispielsweise als DAC, der eine Kapazitätsdiode ansteuert, ausgelegt werden.

Je nach technischer Realisierung der Regelung kann es vorkommen, dass die Regelung ungenau, übersteuernd oder verzögert wirkt. Diese Effekte führen zu einer verfälschten Messung des Füllstandes L, da das Auswertungssignal ZF hierdurch ungewollt zeitlich gedehnt oder gestaucht wird. Dadurch verschiebt sich das zur Füllgut-Oberfläche korrespondierende Maximum $M_{ZF}$ im Auswertungssignal ZF.

Erfindungsgemäß wird dieser Verfälschung entgegengewirkt, indem die Auswertungseinheit 16 das abgespeicherte, digitalisierte Auswertungssignal ZF in Abhängigkeit des Verhältnisses $\phi/\phi_{ref}$ zwischen der gemessenen Relation $\phi$ und der Soll-Relation $\phi_{ref}$ zeitlich entweder dehnt oder staucht. Da es sich um frei abstrahlende Radar-Messung handelt, wird das Auswertungssignal ZF vor der A/D-Wandlung im Gegensatz zu geführtem Radar zunächst gleichgerichtet.

Die Auswertungseinheit 16 kann die Stauchung bzw. Dehnung um den Wert $\Delta t$ durchführen, indem anhand des gleichgerichteten und digitalisierten Auswertungssignals ZF eine mathematische Funktion erstellt wird. Hierzu kann das Auswertungssignal ZF mittels einer bspw. polynomiellen Interpolation werden. Die Auswertungskurve ZF' wird im Anschluss mittels zeitlicher Dehnung bzw. zeitlicher Stauchung der approximierten, mathematischen Funktion um den Wert $\Delta t$ erstellt.

Die zeitliche Dehnung bzw. Stauchung $\Delta t$ erfolgt proportional zu dem Verhältnis $\phi/\phi_{ref}$ zwischen der gemessenen Relation $\phi$ und der Soll-Relation $\phi_{ref}$: Je größer das Verhältnis $\phi/\phi_{ref}$ ist, desto mehr wird das Auswertungssignal gedehnt. Ob das Auswertungssignal ZF in der Auswertungseinheit 16 gedehnt oder gestaucht wird, hängt davon ab, ob das resultierende Verhältnis $\phi/\phi_{ref}$ größer oder kleiner als 1 bzw. größer oder kleiner als 100 % ist. Bei der exemplarischen Darstellung in Fig. 3 wird das Auswertungssignal ZF um $\Delta t$ gestaucht. Die Stauchung $\Delta t$ beruht also auf dem Zusammenhang

$$\frac{t_{ges} - \Delta t}{t_{ges}} = const * \frac{\varphi}{\varphi_{ref}}$$

Mittels der so erhaltenen Auswertungskurve ZF' ermittelt die Auswertungseinheit 16 im Anschluss den Füllstand L. Dabei wird der Füllstand L bestimmt, indem die Auswertungseinheit 16 dasjenige Maximum $M_{ZF'}$ der Auswertungskurve ZF' ermittelt, das durch die Oberfläche des Füllgutes 3 hervorgerufen ist (bei der in Fig. 3 dargestellten, schematischen Auswertungskurve ZF' ist aus Gründen der Veranschaulichung ausschließlich dieses Maximum $M_{ZF'}$ dargestellt). Nach Ermittlung des Maximums $M_{ZF'}$ wird die korrespondierende Signallaufzeit

t'$_m$ zum Maximum M$_{ZF'}$ bestimmt. Somit kann die Auswertungseinheit 16 den Füllstand L gemäß dem Zusammenhang L = h - d anhand derjenigen Messdistanz d, die zur Signallaufzeit t'$_m$ korrespondiert, bestimmen.

Wie aus Fig. 3 hervorgeht, wird das Maximum M$_{ZF'}$ der Auswertungskurve ZF' im Vergleich zum Auswertungssignal ZF durch die Stauchung Δt hin zu einer geringeren Signallaufzeit t'$_m$ korrigiert. Somit wird durch die Erfindung eine etwaige, ungewollte Stauchung oder Dehnung des Auswertungssignals ZF kompensiert, sofern die Abtastrate f'$_c$ aufgrund fehlerhafter Regelung von ihrem Sollwert abweicht. Neben einer verbesserten Genauigkeit der Füllstandsmessung bietet dies auch den Vorteil, dass das Füllstandsmessgerät 1 bezüglich der Regelung der Abtastrate f'$_c$ weniger komplex ausgelegt werden kann.

**Bezugszeichenliste**

| 1 | Füllstandsmessgerät |
|---|---|
| 2 | Behälter |
| 3 | Füllgut |
| 4 | Übergeordnete Einheit |
| 14 | Mischer |
| 15 | Detektor |
| 16 | Auswertungseinheit |
| 17 | Signalwandler |
| 110 | Erster Pulsgenerator |
| 111 | Erster Hochfrequenz-Oszillator |
| 120 | Sende-/Empfangs-Weiche |
| 121 | Antenne |
| 130 | Zweiter Pulsgenerator |
| 131 | Zweiter Hochfrequenz-Oszillator |
| DK | Dielektrizitätswert |
| d | Messdistanz |
| E$_{HF}$ | Reflektierte Mikrowellenpulse |
| e$_{HF}$ | Empfangssignal |
| f$_c$ | Taktrate |
| f'$_c$ | Abtastrate |
| f$_{HF}$ | Frequenz der Mikrowellenpulse |
| h | Einbauhöhe |
| L | Füllstand |
| M$_{ZF'}$ | Maximum |
| R$_{HF}$ | Referenzkurve |
| S$_{HF}$ | Mikrowellenpulse |
| S$_{HF}$ | Hochfrequenz-Pulse |
| s'$_{HF}$ | Abtast-Pulse |
| tm, t'$_m$ | Signallaufzeit |
| ZF | Auswertungssignal |
| ZF' | Auswertungskurve |
| Δt | Dehnung/Stauchung |
| φ | Relation zwischen der Taktrate und der Abtastrate |
| φ$_{ref}$ | Soll-Relation |

**Patentansprüche**

1. Verfahren zur Radar-basierten Messung des Füllstandes (L) eines in einem Behälter (2) befindlichen Füllgutes (3), folgende Verfahrensschritte umfassend:

    - Getaktetes Aussenden von Mikrowellenpulsen (S$_{HF}$) in Richtung des Füllgutes (3) mit einer definierten Taktrate (f$_c$),
    - Empfang reflektierter Mikrowellenpulse (E$_{HF}$) nach Reflektion an der Oberfläche des Füllgutes (3),
    - Erstellung eines Auswertungssignals (ZF) durch Abtastung der empfangenen Mikrowellenpulse (e$_{HF}$) mit einer definierten Abtastrate (f'$_c$),
    - Messung einer Relation (φ) zwischen der Taktrate (f$_c$) und der Abtastrate (f'$_c$),

    **gekennzeichnet durch**

    - Erstellung einer Auswertungskurve (ZF'), indem das Auswertungssignal (ZF) zeitlich gedehnt bzw. gestaucht wird, wobei die Stauchung (Δt) bzw. die Dehnung (Δt) proportional in Abhängigkeit eines Verhältnisses (φ/ φ$_{ref}$) zwischen der gemessenen Relation (φ) und der Soll-Relation (φ$_{ref}$) durchgeführt wird, und
    - Bestimmung des Füllstandes (L) anhand der Auswertungskurve (ZF').

2. Verfahren nach Anspruch 1,

    **dadurch gekennzeichnet, dass**
    die Dehnung bzw. die Stauchung (Δt) gemäß dem Zusammenhang

    $$\frac{t_{ges} - \Delta t}{t_{ges}} = \frac{\varphi}{\varphi_{ref}}$$

    in Abhängigkeit des Verhältnisses (φ/ φ$_{ref}$) zwischen der gemessenen Relation (φ) und der Soll-Relation (φ$_{ref}$) durchgeführt wird.

3. Verfahren nach Anspruch 1 oder 2,
    **dadurch gekennzeichnet, dass**
    die Auswertungskurve (ZF') anhand des Auswertungssignals (ZF), der gemessenen Relation (φ) und der Soll-Relation (φ$_{ref}$) erstellt wird, durch

    - Digitalisierung des Auswertungssignals (ZF),
    - Bestimmung einer mathematischen Funktion mittels zumindest bereichsweiser Approximation des digitalisierten Auswertungssignals (ZF), und
    - Erstellung der Auswertungskurve (ZF') mittels zeitlicher Dehnung bzw. zeitlicher Stauchung ($\Delta$t) der approximierten, mathematischen Funktion, wobei die Stauchung bzw. die Dehnung ($\Delta$t) in Abhängigkeit des Verhältnisses ($\phi/\phi_{ref}$) zwischen der gemessenen Relation ($\phi$) und der Soll-Relation ($\phi_{ref}$) durchgeführt wird.

4. Verfahren nach Anspruch 3,
   **dadurch gekennzeichnet, dass**
   die Approximation als polynomielle Approximation, insbesondere eine Approximation 3. Grades oder höher, durchgeführt wird.

5. Verfahren nach einem der vorhergehenden Ansprüche,
   **dadurch gekennzeichnet, dass**
   der Füllstand (L) anhand der Auswertungskurve (ZF') bestimmt wird, durch

   - Ermittlung eines Maximums ($M_{ZF'}$) der Auswertungskurve (ZF'),
   - Zuweisung einer dem Maximum ($M_{ZF'}$) entsprechenden Signallaufzeit ($t'_m$),
   - Bestimmung des Füllstandes (L) anhand einer Messdistanz (d), die zur Signallaufzeit ($t'_m$) korrespondiert.

6. Radar-basiertes Füllstandsmessgerät zur Durchführung des Verfahrens nach zumindest einem der vorhergehenden Ansprüche, folgende Komponenten umfassend:

   - Eine Puls-Erzeugungseinheit (110, 111), die ausgelegt ist, elektrische Hochfrequenz-Pulse ($S_{HF}$) mit einer definierten Taktrate ($f_c$) zu erzeugen,
   - Eine Sende-/Empfangseinheit (120, 121), die konzipiert ist,

     ○ um die Hochfrequenz-Pulse ($S_{HF}$) als Mikrowellenpulse ($E_{HF}$) in Richtung des Füllgutes (3) auszusenden, und
     ○ um die reflektierten Mikrowellenpulse ($E_{HF}$) nach Reflektion an der Oberfläche des Füllgutes (3) zu empfangen,

   - eine Abtast-Einheit (130, 131), die ausgelegt ist, elektrische Abtast-Pulse ($s'_{HF}$) mit einer definierten Abtastrate ($f'_c$) zu erzeugen,
   - einen Mischer (14), der ausgestaltet ist, um die empfangenen Mikrowellenpulse ($e_{HF}$) derart mit den Abtastpulsen ($s'_{HF}$) zu mischen, dass ein Auswertungssignal (ZF) erzeugt wird,
   - einen Detektor (15), der ausgelegt ist, eine Relation ($\phi$) zwischen der Abtast-Rate ($f'_c$) der Abtast-Pulse ($s'_{HF}$) und der Taktrate ($f_c$) der Hochfrequenzpulse ($S_{HF}$) zu messen, und
   - eine Auswertungseinheit (16), die ausgelegt ist, um eine Auswertungskurve (ZF') zu erstellen, indem das Auswertungssignal (ZF) zeitlich gedehnt bzw. gestaucht wird, wobei die Stauchung ($\Delta$t) bzw. die Dehnung ($\Delta$t) proportional in Abhängigkeit eines Verhältnisses ($\Phi/\Phi$ref) zwischen der gemessenen Relation ($\Phi$) und der Soll-Relation ($\Phi$ref) durchgeführt wird, und

   ○ um anhand der Auswertungskurve (ZF') den Füllstand (L) zu bestimmen.

7. Füllstandsmessgerät nach Anspruch 6, wobei das Füllstandsmessgerät (1) derart ausgelegt ist, um die Abtastrate ($f'_c$) so in Abhängigkeit der gemessenen Relation ($\phi$) zu regeln, dass die Relation ($\phi$) der Soll-Relation ($\phi_{ref}$) entspricht.

## Claims

1. Procedure for the radar-based measurement of the level (L) of a medium (3) located in a tank (2), wherein said procedure comprises the following steps:

   - Clocked emission of microwave pulses ($S_{HF}$) in the direction of the medium (3) at a defined clock rate ($f_c$),
   - Reception of the reflected microwave pulses ($E_{HF}$) following reflection at the surface of the medium (3),
   - Creation of an evaluation signal (ZF) by scanning the microwave pulses received ($e_{HF}$) at a defined scan rate ($f'_c$),
   - Measurement of a relation ($\Phi$) between the clock rate ($f_c$) and the scan rate ($f'_c$),

   **characterized by the following steps:**

   - Creation of an evaluation curve (ZF') by extending or compressing the evaluation signal (ZF) over time, wherein the compression ($\Delta$t) or extension ($\Delta$t) is performed in proportion as a function of a ratio ($\Phi/\Phi_{ref}$) between the measured relation ($\Phi$) and the target relation ($\Phi_{ref}$), and
   - Determination of the level (L) using the evaluation curve (ZF').

2. Procedure as claimed in Claim 1,

   **characterized in that**
   the extension or the compression ($\Delta$t) is performed according to the relation

$$\frac{t_{ges} - \Delta t}{t_{ges}} = \frac{\varphi}{\varphi_{ref}}$$

as a function of the ratio ($\Phi/\Phi_{ref}$) between the measured relation ($\Phi$) and the target relation ($\Phi_{ref}$).

3. Procedure as claimed in Claim 1 or 2, **characterized in that** the evaluation curve (ZF') is created using the evaluation signal (ZF), the measured relation ($\Phi$) and the target relation ($\Phi_{ref}$) by

- digitalizing the evaluation signal (ZF),
- determining a mathematical function using an approximation of the digitalized evaluation signal (ZF) at least in sections, and
- creating the evaluation curve (ZF') using an extension or compression over time ($\Delta t$) of the approximated mathematical function, wherein the compression or extension ($\Delta t$) is performed depending on the ratio ($\Phi/\Phi_{ref}$) between the measured relation ($\Phi$) and the target relation ($\Phi_{ref}$).

4. Procedure as claimed in Claim 3, **characterized in that** the approximation is performed as a polynomial approximation, particularly an approximation of the 3rd degree or more.

5. Procedure as claimed in one of the previous claims, **characterized in that** the level (L) is determined using the evaluation curve (ZF') by

- determining a maximum ($M_{ZF}$) of the evaluation curve (ZF'),
- assigning a signal run time ($t'_m$) corresponding to the maximum ($M_{ZF}$),
- determining the level (L) using a measured distance (d) which corresponds to the signal run time ($t'_m$).

6. Radar-based level transmitter to perform the procedure as claimed in at least one of the previous claims, said transmitter comprising the following components:

- a pulse generation unit (110, 111) designed to generate electrical high-frequency pulses ($S_{HF}$) at a defined clock frequency ($f_c$),
- a transmission/reception unit (120, 121), which is designed

o to emit the high-frequency pulses ($S_{HF}$) as microwave pulses ($E_{HF}$) in the direction of the medium (3), and
o to receive the reflected microwave pulses ($E_{HF}$) following reflection at the surface of the medium (3),

- a scan unit (130, 131) which is designed to generate electrical scan pulses ($s'_{HF}$) with a defined scan rate ($f'_c$),
- a mixer (14) that is designed to mix the received microwave pulses ($e_{HF}$) with the scan pulses ($s'_{HF}$) in such a way that an evaluation signal (ZF) is generated,
- a detector (15) that is designed to measure a relation ($\Phi$) between the scan rate ($f'_c$) of the scan pulses ($s'_{HF}$) and the clock frequency ($f_c$) of the high-frequency pulses ($s_{HF}$), and
- an evaluation unit (16) that is designed to create an evaluation curve (ZF') by expanding or contracting the evaluation signal (ZF) over time, wherein the compression ($\Delta t$) or extension ($\Delta t$) is performed proportionally as a function of a ratio ($\Phi/\Phi_{ref}$) between the measured relation ($\Phi$) and the target relation ($\Phi_{ref}$), and
- for the purpose of determining the level (L) using the evaluation curve (ZF').

7. Level transmitter as claimed in Claim 6, wherein the level transmitter (1) is designed to control the scan rate ($f'_c$) as a function of the measured relation ($\Phi$) in such a way that the relation ($\Phi$) corresponds to the target relation ($\Phi_{ref}$).

**Revendications**

1. Procédé destiné à la mesure basée sur radar du niveau (L) d'un produit (3) se trouvant dans un réservoir (2), lequel procédé comprend les étapes suivantes :

- Émission cadencée d'impulsions micro-ondes ($S_{HF}$) en direction du produit (3) à une fréquence d'horloge définie ($f_c$),
- Réception d'impulsions micro-ondes réfléchies ($E_{HF}$) après réflexion sur la surface du produit (3),
- Création d'un signal d'évaluation (ZF) par balayage des impulsions micro-ondes reçues ($e_{HF}$) à une fréquence de balayage définie ($f'_c$),
- Mesure d'une relation ($\Phi$) entre la fréquence d'horloge ($f_c$) et la fréquence de balayage ($f'_c$),

**caractérisé par les étapes suivantes :**

- Création d'une courbe d'évaluation (ZF') en dilatant ou en comprimant dans le temps le signal d'évaluation (ZF), la compression ($\Delta t$) ou la dilatation ($\Delta t$) étant effectuée proportionnellement en fonction d'un rapport ($\Phi/\Phi_{ref}$) entre la relation mesurée ($\Phi$) et la relation de consigne ($\Phi_{ref}$), et
- Détermination du niveau (L) à l'aide de la courbe d'évaluation (ZF').

2. Procédé selon la revendication 1,

   **caractérisé en ce que**
   la dilatation ou la compression ($\Delta t$) est effectuée selon la relation

   $$\frac{t_{ges} - \Delta t}{t_{ges}} = \frac{\varphi}{\varphi_{ref}}$$

   en fonction du rapport ($\Phi/\Phi_{ref}$) entre la relation mesurée ($\Phi$) et la relation de consigne ($\Phi_{ref}$).

3. Procédé selon la revendication 1 ou 2,

   **caractérisé en ce que**
   la courbe d'évaluation (ZF') est créée à l'aide du signal d'évaluation (ZF), de la relation mesurée ($\Phi$) et de la relation de consigne ($\Phi_{ref}$), par

   - Numérisation du signal d'évaluation (ZF),
   - Détermination d'une fonction mathématique au moyen d'une approximation au moins par zones du signal d'évaluation numérisé (ZF), et
   - Création de la courbe d'évaluation (ZF') au moyen d'une dilatation temporelle ou d'une compression temporelle ($\Delta t$) de la fonction mathématique approximée, la compression ou la dilatation ($\Delta t$) étant effectuée en fonction du rapport ($\Phi/\Phi_{ref}$) entre la relation mesurée ($\Phi$) et la relation de consigne ($\Phi_{ref}$).

4. Procédé selon la revendication 3,
   **caractérisé en ce que**
   l'approximation est effectuée sous la forme d'une approximation polynomiale, notamment une approximation du 3ème degré ou plus.

5. Procédé selon l'une des revendications précédentes,
   **caractérisé en ce que**
   le niveau (L) est déterminé à l'aide de la courbe d'évaluation (ZF'), par

   - Détermination d'un maximum ($M_{ZF}$) de la courbe d'évaluation (ZF'),
   - Attribution d'un temps de propagation du signal ($t'_m$) correspondant au maximum ($M_{ZF}$),
   - Détermination du niveau (L) à l'aide d'une distance de mesure (d) qui correspond au temps de propagation du signal ($t'_m$).

6. Transmetteur de niveau basé sur radar, lequel transmetteur est destiné à la mise en œuvre du procédé selon au moins l'une des revendications précédentes, lequel transmetteur comprend les composants suivants :

   - une unité de génération d'impulsions (110, 111) conçue pour générer des impulsions électriques à haute fréquence ($S_{HF}$) à une fréquence d'horloge définie ($f_c$),
   - une unité d'émission/réception (120, 121), laquelle est conçue

     o pour émettre les impulsions haute fréquence ($s_{HF}$) sous forme d'impulsions micro-ondes ($E_{HF}$) en direction du produit (3), et

     o pour recevoir les impulsions micro-ondes réfléchies ($E_{HF}$) après réflexion sur la surface du produit (3),

   - une unité de balayage (130, 131) laquelle est conçue pour générer des impulsions de balayage électriques ($s'_{HF}$) avec une fréquence de balayage définie ($f'_c$),
   - un mélangeur (14), lequel est conçu pour mélanger les impulsions micro-ondes reçues ($e_{HF}$) avec les impulsions de balayage ($s'_{HF}$) de telle sorte qu'un signal d'évaluation (ZF) soit généré,
   - un détecteur (15), lequel est conçu pour mesurer une relation ($\Phi$) entre la fréquence de balayage ($f'_c$) des impulsions de balayage ($s'_{HF}$) et la fréquence d'horloge ($f_c$) des impulsions haute fréquence ($s_{HF}$), et
   - une unité d'évaluation (16), laquelle est conçue pour créer une courbe d'évaluation (ZF') en dilatant ou en comprimant dans le temps le signal d'évaluation (ZF), la compression ($\Delta t$) ou la dilatation ($\Delta t$) étant effectuée proportionnellement en fonction d'un rapport ($\Phi/\Phi_{ref}$) entre la relation mesurée ($\Phi$) et la relation de consigne ($\Phi_{ref}$), afin de déterminer le niveau (L) à l'aide de la courbe d'évaluation (ZF').

7. Transmetteur de niveau selon la revendication 6, pour lequel le transmetteur de niveau (1) est conçu de manière à régler la fréquence de balayage ($f'_c$) en fonction de la relation mesurée ($\Phi$) de telle sorte que la relation ($\Phi$) corresponde à la relation de consigne ($\Phi_{ref}$).

Fig.1

Fig.2

Fig.3

**IN DER BESCHREIBUNG AUFGEFÜHRTE DOKUMENTE**

**In der Beschreibung aufgeführte Patentdokumente**

- DE 102012104858 A1
- US 2017370762 A1
- US 2002133303 A1
- US 2012056628 A1